# FASCICULE DE BREVET EUROPEEN

(11) **EP 4 145 887 B1**
(45) Date de publication et mention de la délivrance du brevet: **28.05.2025**
(21) Numéro de dépôt: 22193638.8
(22) Date de dépôt: 02.09.2022
(51) Int. Cl.: H04W 24/02, H04W 24/08, H04W 24/10, H04W 84/00, H04W 92/20

(54) **PROCÉDÉ D'OPTIMISATION AUTOMATIQUE DES PARAMÈTRES RADIO DE STATIONS DE BASE ; RÉSEAU DE RADIOCOMMUNICATION ET SYSTÈME D'OPTIMISATION ASSOCIÉS**
VERFAHREN ZUR AUTOMATISCHEN OPTIMIERUNG VON FUNKPARAMETERN VON BASISSTATIONEN; ZUGEHÖRIGES FUNKNETZ UND OPTIMIERUNGSSYSTEM
METHOD FOR AUTOMATIC OPTIMISATION OF RADIO PARAMETERS OF BASE STATIONS; ASSOCIATED RADIO NETWORK AND OPTIMISATION SYSTEM

(30) Priorité: 03.09.2021 FR 2109224
(43) Date de publication de la demande: 08.03.2023
(73) Titulaire: THALES, 92400 Courbevoie (FR)
(72) Inventeur: SCHOLLER, Franck, 92622 GENNEVILLIERS CEDEX (FR); CAPDEVIELLE, Véronique, 92622 GENNEVILLIERS CEDEX (FR); CONAN, Vania, 92622 GENNEVILLIERS CEDEX (FR); SALIBA, Eric, 92622 GENNEVILLIERS CEDEX (FR)
(74) Mandataire: Lavoix

(56) Documents cités:
- US-A1- 2017 251 404
- US-A1- 2020 045 565
- "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 16)", 6 July 2021 (2021-07-06), XP052030849, Retrieved from the Internet <URL:https://ftp.3gpp.org/tsg_ran/WG2_RL2/Specifications/202106_final_specs_after_RAN_92/36300-g60.docx> [retrieved on 20210706]

## Description

La présente invention concerne l'optimisation des ressources radio entre cellules voisines d'un réseau de radiocommunication.

Dans un réseau de communication, en particulier dans le réseau d'accès radio - RAN (« Radio Access Network ») est mis en œuvre un mécanisme d'optimisation des ressources radio entre cellules voisines. On parlera dans la suite de mécanisme SON (« Self Optimizing Network »).

Lors du déploiement d'un réseau, les stations de base de deux cellules voisines sont configurées de manière à coordonner leurs ressources radio. Cette configuration comprend le choix d'un mécanisme SON particulier parmi une pluralité de mécanismes SON envisageables, et la définition des paramètres du mécanisme SON choisi.

Par exemple, le document normatif 3GPP TS 36.300 ou encore 3GPP TR 36.902 définit des mécanismes SON envisageables pour le cas de réseaux LTE (« Long-Term Evolution »).

Même si certains mécanismes SON, tels que les mécanismes SFR (« Soft Frequency Reuse » ) ou ABS (« Almost Blank Subframe ») de gestion les interférences, permettent une redéfinition automatique de certains de leurs paramètres sans intervention humaine, il n'en reste pas moins que le choix « a priori » du mécanisme SON mis en œuvre dans un réseau reste spécifique d'un réseau dont la topologie est fixe, c'est-à-dire pour lesquels les stations de base sont immobiles, le voisinage d'une station de base n'étant pas modifié au cours du temps.

A l'heure actuelle, l'optimisation des ressources radio pour le cas de stations de base mobiles (ou plus généralement, dont la position n'est pas connue a priori, comme sur un réseau cellulaire classique) n'a pas reçu de traitement.

Il y a donc un besoin pour un système d'optimisation automatique permettant une configuration dynamique du mécanisme SON mis en œuvre dans un réseau en fonction de la topologie du réseau à l'instant courant.

Le document US 2017/251404 A1 décrit un procédé au cours duquel un premier orchestrateur associé à une macro-station de base statique communique avec un second orchestrateur associé à une station de base mobile, qui se déplace dans la zone de couverture de la macro-station de base, pour ajuster les paramètres de la macro-station de base et ceux de la station de base mobile. La macro-station de base est adossée à une base de données qui est mise à jour avec la puissance d'émission ajustée et des informations topologiques de la station de base mobile.

Par ailleurs, le document normatif "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 16)", 3GPP DRAFT; 36300-G60, 3RD GENERATION PARTNERSHIP PROJECT (3GPP), 6 juillet 2021, XP052030849, divulgue une liaison de communication Xn entre deux stations de base.

Le but de cette invention est de répondre à ce besoin.

Pour cela, l'invention a pour objet un procédé d'optimisation automatique, un réseau de radiocommunication et un système d'optimisation selon les revendications annexées.

L'invention et ses avantages seront mieux compris à la lecture de la description détaillée qui va suivre d'un mode de réalisation particulier, donné uniquement à titre d'exemple non limitatif, cette description étant faite en se référant aux dessins annexés sur lesquels :
[Fig 1] La figure 1 est une représentation schématique d'une infrastructure permettant la mise en œuvre du procédé selon l'invention ; et,
[Fig 2] La figure 2 est une représentation sous forme de blocs du procédé selon l'invention.

### STRUCTURE GENERALE

Dans ce qui suit, la description d'un mode de réalisation préféré est faite dans le cadre de la norme 3GPP 5G (5^{ème} génération). Cependant, l'homme du métier sait comment adapter l'architecture présentée au cas d'un autre standard de radiocommunication, notamment la norme 3GPP 4G (4^{ème} génération) et ses évolutions (telles que 3GPP LTE « Long Term Evolution »), ou encore les normes à venir, notamment 3GPP 6G (6^{ème} génération ).

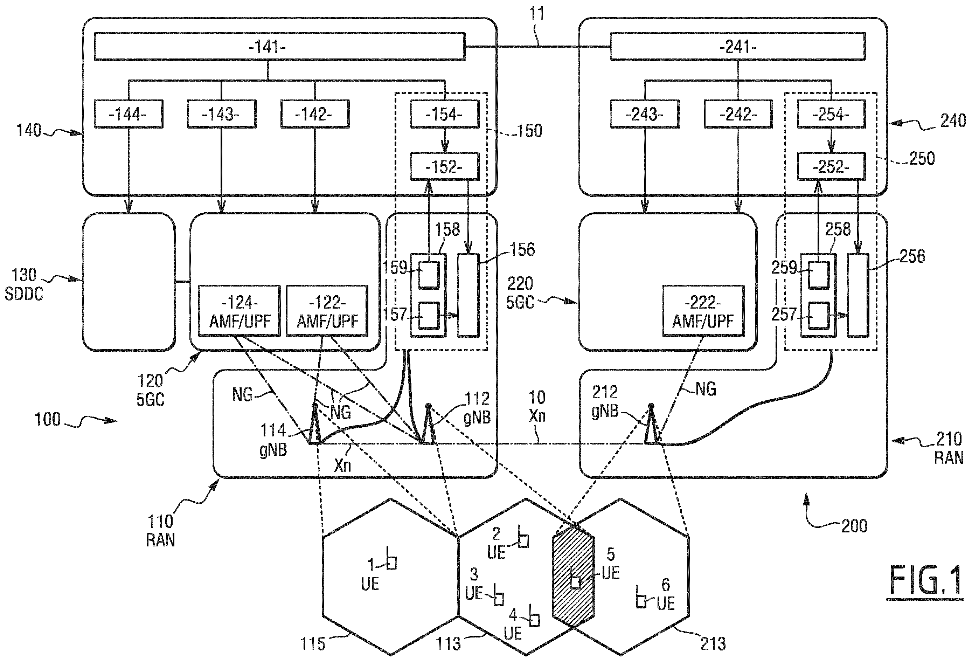

En se référant à la figure 1, une infrastructure de radiocommunication comporte un premier réseau de radiocommunication 100, un second réseau de radiocommunication 200, et une pluralité d'équipements utilisateurs - UE (User Equipment »). Par exemple, sur la figure 1, six UEs sont représentées. Elles sont respectivement référencées de 1 à 6.

Le premier réseau 100 est un réseau de radiocommunication selon la norme 3GPP 5G. Il comporte :
- un réseau d'accès radio - RAN (« Radio Access Network ») 110, intégrant une pluralité de stations de base - gNB (« g-Node B »). Une gNB permet à un UE de se connecter, au moyen d'une liaison radio, au premier réseau 100. Par exemple, sur la figure 1, deux gNB 112 et 114 sont représentées. A la gNB 112 est associée une couverture 113 et à la gNB 114 est associée une couverture 115. Les couvertures 113 et 115 étant mitoyennes, les gNB 112 et 114 sont dites voisines. Dans le RAN, deux gNB sont en communication au travers d'une interface normalisée, dénommée liaison Xn.
- un réseau cœur - 5GC (« 5G Core ») 120. De manière schématique, le 5GC 120 comporte notamment un ou plusieurs équipements réalisant des fonctions de gestion de l'accès - AMF (« Access and Mobility Management ») et/ou des fonctions de plan utilisateur - UPF (« User Plane Function »). Par exemple, sur la figure 1, le 5GC 120 comporte deux équipements AMF/UPF, respectivement référencés 122 et 124. Chaque gNB du RAN 110 est en communication avec chaque équipement AMF/UPF du 5GC au travers d'une interface normalisée, dénommée liaison NG.
- un réseau de données - SDDC (« Software-defined data center ») 130, qui est un réseau, de préférence privé et sécurisé, comportant plusieurs services virtualisés.
- un système d'orchestration 140, qui comporte un orchestrateur de services 141 supervisant une pluralité d'orchestrateurs spécialisés, comme par exemple un orchestrateur de réseau 142, un orchestrateur de sécurité 143 et un orchestrateur IT 144.

L'orchestrateur de services 141 permet, à travers les orchestrateurs spécialisés, l'affectation de ressources physiques et/ou virtuelles disponibles sur le premier réseau 100 en fonction des besoins des utilisateurs (en conformité avec leurs profils respectifs).

Les ressources physiques comprennent par exemple des puissances de calcul du SDDC, des volumes mémoire de travail du SDDC, des valeurs de bande passante sur le réseau, des possibilités de translation d'adresse réseau (« Network Address Translation - NAT) par un pare-feu, etc.

Les ressources virtuelles comprennent par exemple des briques virtualisées correspondant chacune à une application permettant d'effectuer un traitement particulier sur des données spécifiques, tel que par exemple une application d'inspection en profondeur de paquets (« Deep Packet Inspection - DPI ») par un pare-feu, une application de traitement d'images par une application du SDDC, ou encore une application de compression d'un flux de données par le réseau.

L'orchestrateur de réseau 142 contrôle les machines du 5GC 120 pour les configurer selon les commandes reçues de l'orchestrateur de services 141. Il s'agit par exemple de paramétrer le routage d'un certain type de flux de données associé à un utilisateur identifié pour lui assurer une certaine bande passante.

L'orchestrateur de sécurité 143 contrôle les machines du premier réseau 100, notamment les machines du type pare-feu, pour les configurer selon les commandes reçues de l'orchestrateur de services 141. Il s'agit par exemple de filtrer la circulation des données d'un utilisateur authentifié en fonction des privilèges indiqués dans un profil de cet utilisateur tenu à jour par le système d'orchestration.

L'orchestrateur IT 144 contrôle les machines du SDDC 130 pour les configurer selon les commandes reçues de l'orchestrateur de services 141. Il s'agit par exemple d'instancier une application virtuelle particulière en fonction d'un besoin identifié, lui réserver une certaine ressource mémoire et une certaine ressource de calcul sur les machines du SDDC 130, éventuellement la décommissionner tel ou tel instance lorsqu'elle n'est plus utilisée.

Selon l'invention, le premier réseau 100 comporte un système d'optimisation 150 interfacé avec le RAN 110.

Le système d'optimisation 150 comporte, côté système d'orchestration 140, un orchestrateur d'optimisation 152, en tant qu'orchestrateur spécialisé supplémentaire, et avantageusement un catalogue d'objectifs 154.

Le système d'optimisation 150 comporte, côté RAN 110, un contrôleur d'auto-configuration 156 et un module d'analyse 158, pour déterminer la topologie et le trafic sur l'ensemble des cellules du RAN 110. De préférence, le module 158 comporte une unité 159 dédiée à la détermination de la topologie courante du RAN 110 et une unité 157 dédiée au trafic courant sur le RAN 110.

Le second réseau 200 est identique ou similaire au premier réseau 100. Le second réseau est avantageusement plus léger (moins d'équipements) que le premier réseau de manière à pouvoir être embarqué à bord d'un véhicule.

Un composant du second réseau similaire à un composant du premier réseau est identifié par un chiffre de référence qui correspond au chiffre de référence utilisé pour identifier ce composant similaire du premier réseau, augmenté d'une centaine.

Ainsi, le second réseau 200 comporte un RAN 210, un 5GC 220 et un système d'orchestration 240.

Le RAN comporte un gNB 212 associé à une cellule 213.

Le 5GC 220 comporte un équipement AMF/UPF 222. Le gNB 212 est connecté à l'équipement AMF/UPF 222 via une liaison NG.

Le système d'orchestration 240 comporte un orchestrateur de services 241 supervisant une pluralité d'orchestrateurs spécialisés, comme par exemple un orchestrateur de réseau 242 et un orchestrateur de sécurité 243.

Selon l'invention, le second réseau 200 comporte un système d'optimisation 250 interfacé avec le RAN 210.

Le système d'optimisation 250 comporte, côté système d'orchestration 240, un orchestrateur d'optimisation 252, en tant qu'orchestrateur spécialisé supplémentaire, et un catalogue d'objectifs 254.

Le système d'optimisation 250 comporte, côté RAN 210, un contrôleur d'auto-configuration 256 et un module d'analyse 258 comportant une unité 259 de détermination de la topologie courante du RAN 210 et une unité 257 de détermination du trafic courant sur le RAN 210.

Le second réseau 200 est embarqué à bord d'un véhicule porteur.

Au cours du déplacement du véhicule porteur, la cellule 213 du second réseau 200 entre dans la cellule 113 du premier réseau. Dans ce qui suit la cellule 113 sera dite première cellule ou cellule déployée, tandis que la cellule 213 sera dite seconde cellule ou cellule entrante.

Au cours de la mise en œuvre du procédé, comme cela sera décrit ci-dessous, une liaison Xn 10 est établie entre les gNB 112 et 212 des cellules déployée 113 et entrante 213.

Par ailleurs, on considère comme établie une liaison de fédération 11 entre les premier et second réseaux 100 et 200. La liaison 11 est le support d'un plan d'orchestration. Sur la figure 1, la liaison 11 relie schématiquement les premier et second orchestrateurs de services 141 et 241. En réalité, cette liaison peut prendre différentes formes, comme par exemple une liaison entre une première passerelle du premier réseau cœur 5GC 120 et une seconde passerelle du second réseau cœur 5GC 220. Cette liaison peut comporter une portion satellitaire. La manière d'établir une telle liaison est hors de la portée de la présente demande.

### GENERALITES ET DEFINITIONS

De manière générale, l'auto-configuration des mécanismes SON passe par le choix d'un objectif d'optimisation général, puis par la détermination d'une stratégie courante permettant d'atteindre l'objectif général compte tenu de la topologie courante du réseau, la stratégie retenue, qui définit les variables et/ou les paramètres à optimiser, conduisant au déploiement et à la configuration d'un mécanisme SON particulier.

Plus précisément, un « objectif » est un indicateur de performances radio. Par exemple, un objectif peut être l'optimisation de la couverture des cellules ou l'optimisation de la capacité des cellules : maximiser le débit moyen pour les utilisateurs, maximiser une certaine fraction du débit utilisateur, minimiser les interférences entre cellules, ou encore faire en sorte qu'un certain percentile des mesures RSRP (« Reference Signal Received Power ») effectuées par un terminal utilisateur et une station de base soient supérieures à un seuil.

Une « stratégie » est une méthode d'optimisation particulière permettant d'atteindre l'objectif retenu. Par exemple, la méthode d'optimisation peut consister à éteindre simplement la cellule entrante, à coordonner les ressources radio des cellules, à redistribuer la charge entre les cellules entrante et déployée, à ajuster l'angle (« tilt » en anglais) de l'antenne des stations de base des cellules entrante et déployée, ou encore une combinaison de ces stratégies élémentaires.

Une stratégie se caractérise par un profil d'allocation radio (ou mode de transmission radio). Le profil d'allocation radio définit les caractéristiques d'allocation des ressources radio selon une ou plusieurs dimension(s) (fréquentielle, temporelle, spatiale, et/ou de puissance), selon par exemple des catégories d'utilisateurs. Ainsi, par exemple, le profil d'allocation, défini selon les dimensions spatiale, fréquentielle et de puissance, peut consister à émettre avec une puissance amplifiée mais sur une zone spectrale limitée (paramétrable) pour les utilisateurs en bord de cellule et avec une puissance basse pour les autres utilisateurs. Par exemple encore, le profil d'allocation radio, défini sur les dimensions temporelle et de puissance, peut consister à transmettre à basse puissance sur des créneaux temporels (« time slot ») à définir (paramétrable).

Un profil d'allocation radio est ensuite configuré ou reconfiguré de façon dynamique, en prenant en compte des informations de trafic et/ou de topologie du réseau à l'instant courant.

### STRUCTURE PARTICULIERE DE L'ORCHESTRATEUR SON

Pour ce faire, l'orchestrateur d'optimisation, 152 ou 252, d'un système d'orchestration, 150 ou 250, associé à un réseau, 100 ou 200, est en charge de définir une stratégie d'optimisation.

De préférence, la définition d'une stratégie s'effectue à partir d'un ou plusieurs objectif(s) de performances radio sélectionné(s) par un opérateur du réseau associé, par exemple à partir du catalogue d'objectifs, 154 ou 254, qui comporte une pluralité d'objectifs de performances radio prédéfinis.

La définition d'une stratégie s'effectue à partir d'informations relatives à la topologie courante du réseau associé, 100 ou 200. Ces informations topologiques sont remontées par le module d'analyse associé, 158 ou 258.

Le module d'analyse, 158 ou 258, est configuré pour détecter, à chaque instant, la topologie du réseau, à savoir le positionnement et le voisinage des stations de bases du réseau associé et la distribution spatiale du trafic.

Par exemple, le système d'orchestration étant relié à chaque station de base du RAN par des interfaces de communication adaptées permettant d'établir un plan de configuration (« management plane »), le module d'analyse collecte des informations relatives à chaque station de base du réseau, telles que la portée de la station de base, la liste des cellules voisines, la position de la station de base (mesurée par un dispositif de positionnement par satellites - GPS équipant la station), et éventuellement la vitesse de déplacement et l'accélération de la station de base. Par exemple encore, le module d'analyse collecte également les mesures radio nativement collectées, telles que les mesures CQI (« Channel Quality Indicator ») ou RSRP, remontées par les UEs connectées aux différentes stations de base du réseau.

Le module d'analyse peut alors établir la répartition spatiale des stations de base, et pour chaque station de base, la répartition spatiale des UEs. Par exemple, pour une station de base donnée, le nombre d'UEs au centre de cellule desservie par cette station de base et le nombre d'UEs en bord de cellule (c'est-à-dire finalement les UEs dans de bonnes ou de mauvaises conditions radio).

Le contrôleur d'auto-configuration, 156 ou 256, d'un système d'orchestration, 150 ou 250, associé à un réseau, 100 ou 200, automatise la configuration de ou des stations de base du réseau associé pour réaliser le profil d'allocation radio définit par la stratégie reçue de l'orchestrateur d'optimisation 152, 252.

Le contrôleur d'auto-configuration, 156 ou 256, prend également en entrée les informations topologiques délivrées à l'instant courant par le module d'analyse associé, 158 ou 258. Toute modification de ces informations topologiques provoque une reconfiguration du profil d'allocation radio à réaliser.

Le contrôleur d'auto-configuration, 156 ou 256, effectue par conséquent l'allocation effective des ressources radio selon la stratégie indiquée à partir des informations de trafic et de topologie du réseau associé.

### PROCEDE

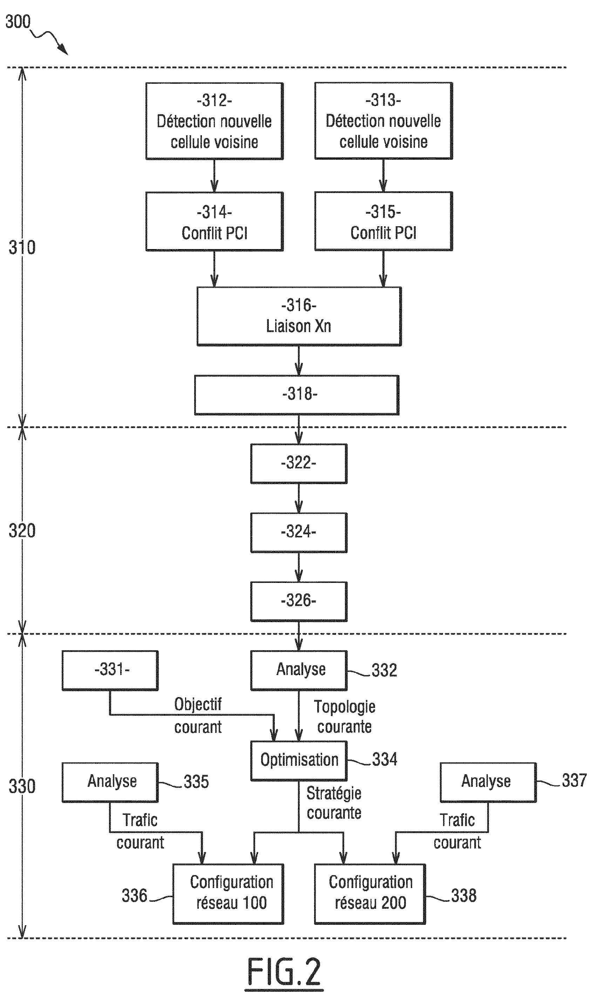

Un mode de réalisation préféré du procédé d'optimisation automatique des paramètres radio selon l'invention va maintenant être présenté, en référence à la figure 2, dans le cadre d'un recouvrement partiel des zones de couverture de la cellule déployée 113 et de la cellule entrante 213.

Le procédé 300 comporte une phase préparatoire 310, qui consiste, côté premier réseau 100, en la détection de l'entrée de la seconde cellule 213 dans la première cellule 113, et parallèlement, côté second réseau 200, en la détection de l'entrée de la première cellule 113 dans la seconde cellule 213. La phase préparatoire se termine, en cas de succès, par l'établissement d'une interface Xn 10 entre la première gNB 112 et la seconde gNB 212. Il y a donc connexion directe des stations de base des cellules entrante et déployée.

Plus précisément, côté premier réseau 100, la phase préparatoire 310 consiste d'abord, dans une étape 312, à assurer la découverte de la cellule entrante. La première gNB 112 de la première cellule 113 sollicite régulièrement les UEs connectées (2 à 5 sur la figure 1) pour réaliser des mesures sur les éventuelles nouvelles cellules au voisinage de ces UEs.

Cette procédure de mesures est par exemple spécifiée par le standard TS 36.331. Elle exploite le radiodiffusion (« broadcast ») par toute cellule d'un identifiant physique de cellule - PCI (« Physical Cell Identifier »).

Chaque UE répond à la première gNB 112 en envoyant un rapport de mesure.

Le rapport de mesure de l'UE 5, dans la zone de recouvrement des première et seconde cellules, 113, 213, comporte alors des informations permettant au premier gNB 112 de détecter l'entrée de la seconde cellule 213.

Ce rapport comporte le PCI de la seconde cellule 213.

Ce rapport ne comporte en revanche pas le NCGI de la seconde cellule 213. Le NCGI (« NR Cell Global Identity») est un identifiant générique des cellules d'un réseau 5G.

Or, disposer de le NCGI de la seconde cellule 213 permet avantageusement de reconnaître le second réseau 200 et de savoir si le premier réseau 100 est autorisé à s'interconnecter avec le second réseau 200 au niveau des stations de base.

Ainsi, de préférence, la première gNB 112 demande alors l'UE 5 de lire et de lui rapporter le NCGI de la seconde cellule 213.

Si le NCGI rapporté correspond à un réseau autorisé, la phase préparatoire 310 se poursuit par une étape 314 visant à résoudre d'éventuels conflits de PCI.

Selon la norme TS 36.300, chaque station de base tient à jour une table de voisinage - NRT (« neighbor relation table ») contenant la liste des identifiants des cellules voisines - TCI (« Target Cell Identifiers »).

Ainsi, la première gNB 112 tient à jour une première table de voisinage de la première cellule 113. Chaque cellule de cette liste est associée à un PCI et à un NCGI.

Si le PCI de la seconde cellule 213 est déjà dans la première table de voisinage, et si le NCGI associé à ce PCI dans la première table de voisinage est différent de celui rapporté par l'UE 5, un conflit est détecté par la première gNB 112. Dit autrement le PCI de la seconde cellule 213 est déjà utilisé par une autre cellule voisine de la première cellule 113.

Si le PCI de la seconde cellule 213 n'est pas dans la première table de voisinage, la cellule entrante candidate est sollicitée pour obtenir des informations de connectivité et l'addition à la première table de voisinage. Si la seconde cellule 213 répond favorablement, elle est ajoutée à la première liste de cellules voisines. Cependant, une étape de détection 313 et une étape de détection de conflit 315, similaires respectivement à l'étape 312 et à l'étape 314, étant mises en œuvre par le second réseau 200, la seconde gNB 212 peut avoir détecté un conflit, le PCI de la première cellule 113 étant déjà dans une seconde table de voisinage maintenue à jour par la seconde gNB 212 (le PCI de la première cellule 113 étant déjà utilisé par une autre cellule voisine de la seconde cellule 213). Dans ce cas, la seconde cellule 213 peut répondre défavorablement à la sollicitation de la première cellule 113 de sorte que la seconde cellule 213 n'est pas ajoutée à la première table de voisinage.

Eventuellement, des processus de réattribution dynamique de PCI peuvent être mis en œuvre dans le premier réseau et/ou le second réseau en cas de conflit pour modifier le PCI de ou des cellule(s) et permettre leur enregistrement dans table de voisinage d'une ou des station(s) de base.

En cas d'ajout réussi de la cellule entrante dans la table de voisinage de la cellule déployée à l'issue de l'étape 314 et de la cellule déployée dans la table de voisinage de la cellule entrante à l'issue de l'étape 315, la phase préparatoire 310 se poursuit par une étape 316 consistant à établir l'interface de connexion entre la première gNB 112 et la seconde gNB 212 au moyen de la liaison Xn 10. Avantageusement, cette étape met en œuvre un processus d'authentification mutuelle des deux gNB. L'établissement de cette liaison permet d'établir des plans de communication de données entre les premier et second réseaux 100 et 200.

Puis, dans une étape 318, les systèmes d'optimisation 150 et 250 entrent en négociation, au travers de la liaison de fédération 11, pour déterminer lequel des deux systèmes d'optimisation va prendre la main pour la suite de la mise en œuvre du procédé, c'est-à-dire devenir le système d'optimisation maître.

Par exemple, un identifiant de niveau hiérarchique est attribué à chaque réseau. Le second réseau possède un niveau hiérarchique bas et le premier réseau possède un niveau hiérarchique haut. Les niveaux hiérarchiques sont partagés entre les systèmes d'optimisation, puis comparés l'un avec l'autre, de manière à déterminer quel système d'optimisation doit devenir maître. Dans la présente description, le système d'orchestration 150 devient le maître.

De préférence, le procédé 300 comporte ensuite une phase transitoire 320, qui vise à réduire l'impact de la cellule entrante sur les performances de la cellule déployée. Cette phase transitoire 320 dure jusqu'à l'immobilisation du véhicule porteur du second réseau 200 ou bien au début de la phase d'optimisation 330, qui est la phase suivante du procédé 300.

Durant cette phase transitoire 320, à l'étape 322, la première gNB 112 demande, sur la liaison Xn, à la seconde gNB 212 de réduire graduellement sa puissance d'émission afin de préserver les communications en cours entre la première station de base 112 et les UEs 2 à 5. En conséquence, à chaque pas de temps, la seconde gNB 212 diminue sa puissance d'émission d'un nombre prédéfini de décibels (dBm).

Durant cette diminution graduelle, à chaque pas de temps, la première gNB 112 analyse (étape 324) l'impact de la décroissance de la puissance sur les interférences à partir par exemple de la statistique sur le nombre de retransmissions (« HARQ process ») ou autre statistique impactée par les interférences entre cellules.

Lorsque la statistique retrouve un niveau acceptable, la première gNB 112 envoie une requête à la second gNB 212 de stopper la décroissance de sa puissance (étape 326).

Puis le procédé 300 passe dans la phase d'optimisation 330, qui permet de mettre en place le meilleur mécanisme SON possible pour optimiser les performances combinées des cellules déployée et entrante.

A l'étape 331, un objectif courant a été présélectionné, hors ligne, par un opérateur du premier réseau 100 dans le catalogue 154. Il s'agit par exemple d'un objectif consistant à coordonner l'utilisation des ressources des cellules sur une zone d'intérêt de façon à minimiser les interférences sur un même canal tout en allouant les ressources nécessaires pour satisfaire l'objectif visé. Cette objectif vise le meilleur compromis entre la limitation des interférences entre les deux cellules, en évitant de réutiliser les mêmes ressources radio, tout en adaptant la bande spectrale aux besoins du trafic.

A l'étape 332, le premier module d'analyse 158 est périodiquement mis en œuvre afin de mettre à jour la topologie du réseau à l'instant courant. La seconde gNB 212 étant connectée par la liaison Xn à la première gNB 112, les informations relatives à la seconde cellule 213 sont également prises en compte par le premier module d'analyse 158 pour déterminer la topologie courante du réseau.

A l'étape 334, suite à une modification de la topologie courante, le premier orchestrateur d'optimisation 152 est exécuté afin de sélectionner une stratégie adaptée en prenant en compte l'objectif courant et la nouvelle topologie courante du réseau, telle qu'indiquée par le premier module d'analyse 158.

Dans un mode de réalisation, un module orchestrateur d'optimisation met en œuvre une pluralité de règles logiques pour, en fonction de la topologie courante et de l'objectif à remplir, définir la stratégie optimale. En variante, un module orchestrateur d'optimisation met en œuvre un algorithme d'apprentissage automatique (« machine learning ») par exemple par supervision permettant de décider de la stratégie optimale en fonction des entrées que sont la topologie courante et l'objectif à remplir.

Le premier orchestrateur d'optimisation 152 transmet la stratégie retenue (c'est-à-dire un profil d'allocation radio) au contrôleur d'auto-configuration 156 du premier réseau 100, mais également au second contrôleur d'auto-configuration 256 du second réseau 200 (via la liaison de fédération 11).

Alors que les étapes précédentes sont réalisées au niveau du système orchestrateur 140, considéré comme système maître, les étapes suivantes sont réalisées au niveau du premier RAN 110 et du second RAN 120. Leur mise en œuvre peut être découplée des étapes précédentes, notamment lorsqu'il n'y a pas modification de la topologie du réseau, mais uniquement une modification du trafic, nécessitant un nouveau paramétrage du profil d'allocation radio sans changement de la nature de ce profil.

A l'étape 335, le premier module d'analyse 158 met à jour régulièrement les informations de trafic sur le premier réseau 100 à l'instant courant.

A l'étape 336, le premier contrôleur d'auto configuration 156 met en œuvre un modèle pour réaliser la stratégie reçue du premier orchestrateur d'optimisation 152, en prenant en compte les informations de trafic à l'instant courant délivrées par le premier module d'analyse 158 pour déterminer dynamiquement les paramètres du profil d'allocation radio de la stratégie reçue.

Parallèlement, l'étape 337, le second module d'analyse 258 met à jour régulièrement les informations de trafic sur le second réseau à l'instant courant.

A l'étape 338, le second contrôleur d'auto configuration 158 met en œuvre un modèle pour réaliser la stratégie reçue du premier orchestrateur d'optimisation 152, en prenant en compte les informations de trafic à l'instant courant délivrées par le second module d'analyse 258 pour déterminer dynamiquement les paramètres du profil d'allocation radio de la stratégie reçue.

### EXEMPLE

Dans un exemple illustratif simple, l'objectif courant est d'assurer la couverture à X % des utilisateurs ou augmenter la capacité de Y %.

Comme information topologique, est par exemple pris en compte la distance entre la seconde station de base 212 et la première station de base 112.

Si la distance est faible (la seconde station de base opérant à proximité de la première station de base), la stratégie retenue peut être, pour assurer la couverture, d'éteindre la seconde station de base. Le ou les contrôleur(s) d'auto-configuration sont alors commandés pour mettre en pratique cette stratégie.

Si la distance est moyenne (la seconde station de base opérant en bordure de la première cellule associée à la première station de base), la stratégie retenue peut être, pour assurer l'extension de la couverture, de mettre en œuvre une procédure ABS (« almost blank subframe ») avec CRE (« cell range expansion »). Le ou les contrôleur(s) d'auto-configuration sont alors commandés pour mettre en pratique cette stratégie.

Enfin, si la distance est grande (la seconde station de base opérant à distance de la première station de base), la stratégie retenue peut être, pour assurer l'extension de la couverture, de mettre en œuvre une procédure de contrôle de puissance avec SFR (« Soft Frequency Reuse »). Le ou les contrôleur(s) d'auto-configuration sont alors commandés pour mettre en pratique cette stratégie. Un contrôleur d'auto-configuration ajuste alors les paramètres du profil d'allocation des ressources radio pour : émettre avec une puissance élevée mais dans un intervalle de fréquence réduit et spécifique de la cellule pour ne pas interférer avec le bord des cellules voisines, afin d'atteindre les UEs en bord de cellule - CEU (« Cell Edge Users ») ; émettre avec une puissance réduite mais dans une bande spectrale étendue pour les UEs au centre de la cellule - CCU (« Cell Center Users »),

Dans un autre exemple illustratif, l'objectif courant consiste à répartir la charge.

La stratégie retenue peut alors être une redistribution de charge entre cellules déployée et entrante avec réduction de puissance afin de déclencher le basculement intercellulaire (« handover ») de tout ou partie des UEs connectées à la seconde cellule 213 vers la première cellule 113. Le ou les contrôleurs d'auto-configuration mettent en pratique cette stratégie en adaptant les paramètres du profil d'allocation radio correspondant afin de réduire la puissance d'émission de la seconde gNB 212. La charge de la première cellule 113 augmente et, par conséquent, la bande passante requise augmente. Il y a donc un compromis à établir, sachant que la réduction de l'interférence de la seconde cellule 213 sur la première cellule 113 permet d'améliorer l'indicateur de qualité de canal - CQI (« Channel Quality Indicator ») et donc d'alléger la contrainte sur la bande passante nécessaire malgré l'augmentation de la charge pour la première cellule. Ainsi, lorsque la charge en bord de la seconde cellule 213 est faible, le fait de réduire la puissance sur la seconde cellule 213 va pousser les utilisateurs en bordure de la seconde cellule 213 de basculer vers la première cellule 113. La puissance d'émission de la seconde cellule 213 est réduite de manière à ne plus couvrir que les utilisateurs au centre de la seconde cellule 213. Les interférences causées par la seconde cellule 213 sur la première cellule 113 sont significativement réduites.

### VARIANTES

Si le cas d'un réseau 5G a plus particulièrement été présenté dans l'exemple précédent, l'homme du métier saura comment adapter cet enseignement au cas d'autres types de réseaux de radiocommunication. Par exemple, en 4G/LTE, au lieu d'une liaison Xn entre les stations de base déployée et entrante, c'est une liaison X2 ou S1 qui sera établie.

Si dans le mode de réalisation préféré, le cas de la superposition de deux cellules de stations de base mobiles l'une par rapport à l'autre et appartenant à deux réseaux différents mais fédérés l'un avec l'autre, l'invention s'applique plus généralement à la superposition de deux cellules de stations de base mobiles l'une par rapport à l'autre appartenant à un même réseau, ou PLMN (« Public Land Mobile Network »), dont la topologie évolue au cours du temps et pour lequel les mécanismes d'optimisation doivent être adaptés en temps réels.

Alors que la présente description a été faite pour le cas de l'entrée d'une seconde cellule dans une première cellule, elle s'applique également à la sortie d'une seconde cellule d'une première cellule, ou à toute évolution des positions et/ou des couvertures relatives des deux cellules. Le procédé selon l'invention permet d'ajuster les paramètres des mécanismes d'optimisation radio d'une cellule lors de toute évolution de son environnement radio.

### AVANTAGES

L'invention est donc une solution qui permet d'autoconfigurer les paramètres d'allocation radio des stations de base d'un ou plusieurs RAN(s) dont la topologie évolue au cours du temps, afin d'optimiser les performances des stations de base selon un objectif global lui-même configurable. Cette auto-configuration s'effectue sans connaissance « a priori » de la topologie du réseau. Il est donc nécessaire de mettre en place un moyen de découvrir automatiquement cette topologie.

L'homme du métier comprendra que la présente invention répond au problème de l'impossibilité de planifier le déploiement (notion de RNP - « Radio Network Planning ») ni d'optimiser les paramètres radio (notion de RNO - « Radio Network Optimization ») dans la mesure où l'on ne connaît pas a priori quel sera le voisinage d'une station de base particulière, ni quelle sera la trajectoire relative suive par une station de base appartenant au voisinage de ladite station de base particulière.

La structure du système d'optimisation 150 fondée sur deux unités, respectivement l'orchestrateur d'optimisation et le contrôleur d'auto-configuration, permet de réaliser une boucle lente (avec exécution des étapes 312 à 334 lors de la modification de la topologie pour déterminer une stratégie adaptée par l'orchestrateur), et une boucle plus rapide (réajustement par le contrôleur d'auto-configuration de la configuration du réseau pour réaliser la stratégie sélectionnée) en tenant compte du trafic ou de tout changement des conditions radio sur le réseau.

En variante, la détermination d'une nouvelle stratégie ou la reconfiguration du réseau peut être déclenchée non pas automatiquement (lors de la modification de la topologie du réseau), mais sur demande d'un opérateur.

## Revendications

1. Procédé (300) exécuté par un système d'optimisation (150) pour l'optimisation automatique des paramètres radio d'une première station de base (112) et d'une seconde station de base (212), la première station de base (112) appartenant à un premier réseau de radiocommunication (100) et assurant une couverture sur une première cellule (113) et le seconde station de base (212) appartenant au premier réseau de radiocommunication ou à un second réseau de radiocommunication (200), et assurant une couverture sur une seconde cellule (213), la seconde station de base étant mobile par rapport à la première station de base, le procédé consistant à :
- lors d'une évolution du recouvrement de la première cellule (113) par la seconde cellule (213), mettre à jour une première table de voisinage tenue à jour par la première station de base (112) avec des informations de la seconde cellule (213) ;
- mettre à jour (333), par un premier module d'analyse, d'une topologie courante de la couverture radio, à savoir le positionnement et le voisinage des stations de bases;
- déterminer (334), au moyen d'un orchestrateur d'optimisation (152), une stratégie courante à mettre en œuvre à partir de la topologie courante mise à jour, la stratégie courante correspondant à un profil d'allocation radio de la première station de base et de la seconde station de base ;
- évaluer (335, 337), par un second module d'analyse, un trafic courant de la couverture radio ; et,
- configurer (336, 337), au moyen d'un contrôleur d'auto-configuration, les paramètres radio de la première station de base et de la seconde station de base selon la stratégie courante, en fonction du trafic courant,
le procédé étant **caractérisé en ce que**, lors d'une évolution correspondant à l'entrée de la seconde cellule dans la première cellule, pour ajouter la seconde cellule (213) à la première table de voisinage tenue à jour par la première station de base (112), le procédé (300) comporte une étape de détection (312), via le ou les équipement(s) utilisateur connecté(s) à la première station de base (112) de la seconde station de base (212), une étape de résolution (314) de conflit d'identifiant au cas où l'identifiant de la seconde cellule (213) soit déjà présent dans la première table de voisinage tenue à jour par la première station de base (112), et une étape d'établissement (316) d'une liaison d'interface (10) entre les première et seconde stations de base.

2. Procédé selon la revendication 1, dans lequel pour déterminer la stratégie courante, l'orchestrateur d'optimisation sélectionne la stratégie courante parmi : une extinction de la seconde station de base ; une allocation de ressources radio sur un plan temporel, un plan fréquentiel, un plan de puissance et/ou un plan spatial ; une redistribution d'une charge entre les première et seconde cellules ; un ajustement d'un angle d'un faisceau d'une antenne équipant la première station de base et/ou la seconde station de base.

3. Procédé selon la revendication 1 ou la revendication 2, comportant une étape de choix d'un objectif d'optimisation, l'orchestrateur d'optimisation (152) déterminant une stratégie courante, non seulement à partir de la topologie courante, mais également à partir de l'objectif d'optimisation préalablement choisi.

4. Procédé selon la revendication 3, dans lequel l'objectif d'optimisation est choisi dans un catalogue (154).

5. Procédé selon l'une quelconque des revendications 1 à 4, dans lequel la topologie courante est mise à jour à partir d'informations mesurées parmi : une position de chaque station de base, une portée de chaque station de base, une vitesse de déplacement de chaque station de base, une accélération de chaque station de base.

6. Procédé selon l'une quelconque des revendications 1 à 5, dans lequel, après l'établissement d'une liaison d'interface (10) entre les première et seconde stations de base, le procédé (300) comporte une phase (320) de réduction graduelle d'une puissance de transmission de la seconde station de base (212) pour réduire des interférences entre la première cellule (113) et la seconde cellule (213).

7. Procédé selon l'une quelconque des revendications 1 à 6, dans lequel la liaison d'interface (10) entre les première et seconde stations de base est une liaison du type X2 ou Xn ou S1.

8. Réseau de radiocommunication (100) comportant un réseau d'accès radio (110), un réseau cœur (120) et un système d'orchestration (140), **caractérisé en ce que** le réseau de radiocommunication comporte en outre un système d'optimisation (150) pour la mise en œuvre d'un procédé d'optimisation selon l'une quelconque des revendications 1 à 7, le système d'optimisation (150) comportant, côté système d'orchestration (140), un orchestrateur d'optimisation (152) et, côté réseau d'accès radio (110), un contrôleur d'auto-configuration (156) et un ou plusieurs module(s) d'analyse (158) de mise à jour d'une topologie courante.

9. Système d'optimisation (150), **caractérisé en ce que**, lorsqu'il est intégré dans un réseau de radiocommunication selon la revendication 8, il permet la mise en œuvre d'un procédé d'optimisation selon l'une quelconque des revendications 1 à 7, le système d'optimisation (150) comportant un orchestrateur d'optimisation (152), un contrôleur d'auto-configuration (156), un premier module d'analyse de détermination d'une topologie courante du réseau et un second module d'analyse de détermination d'un trafic courant sur le réseau.

## Patentansprüche

1. Verfahren (300), das von einem Optimierungssystem (150) zur automatischen Optimierung von Funkparametern einer
ersten Basisstation (112) und einer zweiten Basisstation (212) ausgeführt wird, wobei die erste Basisstation (112) zu einem ersten Funkkommunikationsnetz (100) gehört und eine Abdeckung über eine erste Zelle (113) gewährleistet, und die zweite Basisstation (212) zu dem ersten Funkkommunikationsnetz oder zu einem zweiten Funkkommunikationsnetz (200) gehört, und eine Abdeckung über eine zweite Zelle (213) gewährleistet, wobei die zweite Basisstation in Bezug auf die erste Basisstation mobil ist, wobei das Verfahren aus Folgendem besteht:
- bei einer Änderung der Abdeckung der ersten Zelle (113) durch die zweite Zelle (213), Aktualisieren einer ersten Nachbarschaftstabelle, die von der ersten Basisstation (112) mit Informationen aus der zweiten Zelle (213) aktualisiert gehalten wird;
- Aktualisieren (333), durch ein erstes Analysemodul, einer aktuellen Topologie der Funkabdeckung, nämlich der Positionierung und der Nachbarschaft der Basisstationen;
- Bestimmen (334), mittels eines Optimierungsorchestrators (152), einer aktuellen Strategie, die anhand der aktualisierten aktuellen Topologie implementiert werden soll, wobei die aktuelle Strategie einem Funkzuweisungsprofil der ersten Basisstation und der zweiten Basisstation entspricht;
- Bewerten (335, 337), durch ein zweites Analysemodul, des aktuellen Verkehrs der Funkabdeckung; und
- Konfigurieren (336, 337), mittels einer selbstkonfigurierenden Steuerung, der Funkparameter der ersten Basisstation und der zweiten Basisstation gemäß der aktuellen Strategie abhängig von dem aktuellen Datenverkehr,
wobei das Verfahren **dadurch gekennzeichnet ist, dass** bei einer Entwicklung, die dem Eintritt der zweiten Zelle in die erste Zelle entspricht, zum Hinzufügen der zweiten Zelle (213) zu der ersten Nachbarschaftstabelle, die von der ersten Basisstation (112) aktualisiert wird, das Verfahren (300) einen Erfassungsschritt (312) über die mit der ersten Basisstation (112) verbundene(n) Benutzerausrüstung(en), der zweiten Basisstation (212), einen Auflösungsschritt (314) eines Identifikatorkonflikts in einem Fall, in dem der Identifikator der zweiten Zelle (213) bereits in der ersten Nachbarschaftstabelle vorhanden ist, die von der ersten Basisstation (112) aktualisiert wird, und einen Aufbauschritt (316) einer Schnittstellenverbindung (10) zwischen der ersten und der zweiten Basisstation umfasst.

2. Verfahren nach Anspruch 1, wobei der Optimierungsorchestrator zum Bestimmen der aktuellen Strategie die aktuelle Strategie auswählt aus: einer Abschaltung der zweiten Basisstation; einer Zuweisung von Funkressourcen auf einer Zeitebene, einer Frequenzebene, einer Leistungsebene und/oder einer räumlichen Ebene; einer Umverteilung einer Last zwischen der ersten und der zweiten Zelle; einer Einstellung eines Winkels eines Strahls einer Antenne, mit der die erste Basisstation und/oder die zweite Basisstation ausgestattet ist.

3. Verfahren nach Anspruch 1 oder Anspruch 2, umfassend einen Auswahlschritt eines Optimierungsziels, wobei der Optimierungsorchestrator (152) eine aktuelle Strategie nicht nur anhand der aktuellen Topologie, sondern auch anhand des zuvor ausgewählten Optimierungsziels bestimmt.

4. Verfahren nach Anspruch 3, wobei das Optimierungsziel ausgewählt wird aus einem Katalog (154).

5. Verfahren nach einem der Ansprüche 1 bis 4, wobei die aktuelle Topologie anhand von gemessenen Informationen aktualisiert wird, die ausgewählt werden aus: einer Position von jeder Basisstation, einer Reichweite von jeder Basisstation, einer Bewegungsgeschwindigkeit von jeder Basisstation, einer Beschleunigung von jeder Basisstation.

6. Verfahren nach einem der Ansprüche 1 bis 5, wobei nach dem Aufbau einer Schnittstellenverbindung (10) zwischen der ersten und der zweiten Basisstation, das Verfahren (300) eine Phase (320) einer schrittweisen Reduzierung einer Sendeleistung der zweiten Basisstation (212) umfasst, um Interferenzen zwischen der ersten Zelle (113) und der zweiten Zelle (213) zu reduzieren.

7. Verfahren nach einem der Ansprüche 1 bis 6, wobei die Schnittstellenverbindung (10) zwischen der ersten und der zweiten Basisstation eine Verbindung vom Typ X2 oder Xn oder S1 ist.

8. Funkkommunikationsnetz (100), umfassend ein Funkzugangsnetz (110), ein Kernnetz (120) und ein Orchestrierungssystem (140), **dadurch gekennzeichnet, dass** das Funkkommunikationsnetz ferner ein Optimierungssystem (150) zum Durchführen eines Optimierungsverfahrens nach einem der Ansprüche 1 bis 7 umfasst, das Optimierungssystem (150) auf der Seite des Orchestrierungssystems (140) einen Optimierungsorchestrator (152) und auf der Seite des Funkzugangsnetzes (110) eine selbstkonfigurierende Steuerung (156) und ein oder mehrere Analysemodul(e) (158) zum Aktualisieren einer aktuellen Topologie umfasst.

9. Optimierungssystem (150), **dadurch gekennzeichnet, dass** es, wenn es in ein Funkkommunikationsnetz nach Anspruch 8 integriert ist,
das Durchführen
eines Optimierungsverfahrens nach einem der Ansprüche 1 bis 7 ermöglicht, das Optimierungssystem (150) einen Optimierungsorchestrator (152), eine selbstkonfigurierende Steuerung (156), ein erstes Analysemodul zum Bestimmen einer aktuellen Topologie des Netzes und ein zweites Analysemodul zum Bestimmen eines aktuellen Verkehrs auf dem Netz umfasst.

## Claims

1. A method (300) executed by an optimization system (150) for automatically optimizing the radio parameters of a
first base station (112) and of a second base station (212), the first base station (112) belonging to a first radio communication network (100) and providing coverage on a first cell (113) and the second base station (212) belonging to the first radiocommunication network or a second radiocommunication network (200) and providing coverage on a second cell (213), the second base station being mobile relative to the first base station, the method consisting in:
- during a change in the overlap of the first cell (113) by the second cell (213), updating a first neighborhood table kept up to date by the first base station (112) with information from the second cell (213);
- updating (333), by a first analysis module, a current topology of the radio coverage, namely the positioning and the neighborhood of the base stations;
- determining (334), by means of an optimization orchestrator (152), a current strategy to be implemented from the updated current topology, the current strategy corresponding to a radio allocation profile of the first base station and the second base station;
- evaluating (335, 337), by a second analysis module, current traffic of the radio coverage; and
- configuring (336, 337), by means of a self-configuration controller, the radio parameters of the first base station and of the second base station according to the current strategy, according to the current traffic,
the method being **characterized in that**, upon an evolution corresponding to the entry of the second cell into the first cell, to add the second cell (213) to the first neighborhood table kept up to date by the first base station (112), the method (300) comprises a detection step (312) for detecting, via the user equipment item(s) connected to the first base station (112), the second base station (212), an identifier conflict resolution step (314) in the event that the identifier of the second cell (213) is already present in the first neighborhood table kept up to date by the first base station (112), and a step of establishing (316) an interface link (10) between the first and second base stations.

2. The method according to claim 1, wherein to determine the current strategy, the optimization orchestrator selects the current strategy from among: a shutdown of the second base station; an allocation of radio resources on a temporal plane, a frequency plane, a power plane and/or a spatial plane; a redistribution of a load between the first and second cells; an adjustment of an angle of a beam of an antenna fitted to the first base station and/or the second base station.

3. The method according to claim 1 or claim 2, comprising a step of choosing an optimization objective, the optimization orchestrator (152) determining a current strategy, not only from the current topology, but also from the previously chosen optimization objective.

4. The method according to claim 3, wherein the optimization objective is selected from a catalog (154).

5. The method according to any one of claims 1 to 4, wherein the current topology is updated from information measured among: a position of each base station, a range of each base station, a movement speed of each base station, an acceleration of each base station.

6. The method according to any one of claims 1 to 5, wherein, after the establishment of an interface link (10) between the first and second base stations, the method (300) includes a step (320) of gradually reducing a transmission power of the second base station (212) to reduce interference between the first cell (113) and the second cell (213).

7. The method according to any one of claims 1 to 6, wherein the interface link (10) between the first and second base stations is an X2 or Xn or S1 type link.

8. A radio communication network (100) comprising a radio access network (110), a core network (120) and an orchestration system (140), **characterized in that** the radio communication network further comprises an optimization system (150) for implementing an optimization method according to any one of claims 1 to 7, the optimization system (150) comprising, on the orchestration system (140) side, an optimization orchestrator (152) and, on the radio access network (110) side, an auto-configuration controller (156) and one or more analysis module(s) (158) for updating a current topology.

9. An optimization system (150), **characterized in that**, when it is integrated into a radiocommunication network according to claim 8,
it allows the implementation of
an optimization method according to any one of claims 1 to 7, the optimization system (150) comprising an optimization orchestrator (152), an auto-configuration controller (156), a first analysis module for determining a current topology of the network and a second module analysis for determining a current traffic on the network.
